# EUROPEAN PATENT APPLICATION

(11) **EP 4 332 925 A1**
(43) Date of publication of application: **06.03.2024**
(21) Application number: 22193995.2
(22) Date of filing: 05.09.2022
(51) Int. Cl.: G07C 9/10, G07C 9/25, G07B 15/00

(54) **METHODS AND SYSTEMS FOR A PERSON AND/OR A VEHICLE**

(71) Applicant: Skidata GmbH, 5083 Grödig/Salzburg (AT)
(72) Inventor: HAIDACHER, Martin, Salzburg (AT)
(74) Representative: Mewburn Ellis LLP

(57) **Abstract**

The invention refers to a method for identifying a person (16) and/or a vehicle, comprising the steps of storing a first unique identifier (31a) of the person (16) and/or the vehicle on a mobile device (14); sending the first unique identifier (31a) from the mobile device (14) to an access system (12) and storing the first unique identifier (31a) in a buffer of the access system (12); generating a video stream of a vicinity of the access system (12) using a video camera (26) of the access system (12), identifying persons (16) and/or vehicles in the generated video stream, and generating second unique identifiers (31b) of the persons (16) and/or the vehicles using a function for the identified persons (16) and/or vehicles; comparing, by the access system (12), the second unique identifiers (31b) with the first unique identifier (31a) for verifying the identity of the person (16) and/or the vehicle; and generating a confirmation signal by the access system (12) if the comparison of step d) verifies the identity of the person (16) and/or the vehicle.

## Description

The present invention relates to a method for identifying a person and/or a vehicle comprising the steps of storing a first unique identifier of the person and/or the vehicle on a mobile device and sending the first unique identifier from the mobile device to an access system.

The invention further refers to a system for identifying a person which comprises a mobile device configured to store a first unique identifier of the person and/or the vehicle and an access system including a camera.

The invention also relates to a method for identifying a person and/or a vehicle comprising the steps of searching for mobile devices in a vicinity of the access system and, if a mobile device is found, sending a request to the mobile device to have the mobile device send a first unique identifier of the person and/or the vehicle to the access system and receiving the first unique identifier from the mobile device and storing the first unique identifier in a buffer of the access system.

Access systems for persons (which are sometimes called checkpoints) are known from the prior art. They can comprise means for the detection and evaluation of access authorization as well as mechanical blocking elements, for example in the form of turnstiles, sliding doors, lifting-sliding doors or so-called flap gates, whereby the blocking elements are actuated in the presence of a valid access authorization .

People are becoming more reluctant about having their private information and scanned facial images stored or saved by third parties, including government agencies and private companies. People often do not want entities, even ones they trust, to store and keep facial scans of them. At the same time, people want to be able to get through environments that require multiple checkpoints easier and seamless.

US 2001/0018660 A1 describes a ticketing system that includes portable ticketing cards, in which biometrics identification can be encoded. The ticketing system can comprise a visitor card, a read/write device and a biometric box. The visitor card is used to gain access to an event and can include handheld terminals with a database storage, processing capabilities and display means. US 2018/0082220 A1 refers to techniques for validating a ticket based on biometric data by a ticket holding user, in which a ticket controller device broadcasts an inquiry frame specifying a request for authentication data to a ticket user requesting access, for example on a mobile device. EP 3 923 252 A1 describes an access system that includes a camera, an access control device and a local processing device. The access control device may grant access to a particular environment, if authorized credentials are received. US 2015/0325067 A1 relates to an access management system and method, where the access management system includes an authentication means with authentication terminal and a user terminal.

The present invention is based on the objective of reliably providing access while reducing transfer of data sensitive to the user to a third party.

This objective is solved by the subject matter of the independent claims. Optional embodiments are described in the depending claims.

A method for identifying a person and/or a vehicle, comprising the steps of
a) storing a first unique identifier of the person and/or the vehicle on a mobile device;
b) sending the first unique identifier from the mobile device to an access system and storing the first unique identifier in a buffer of the access system;
c) generating a video stream of a vicinity of the access system using a video camera of the access system, identifying persons and/or vehicles in the generated video stream, and generating second unique identifiers of the persons and/or the vehicles (optionally using a function for the identified persons and/or vehicles),
d) comparing, by the access system, the second unique identifiers with the first unique identifier for verifying the identity of the person and/or the vehicle; and
e) generating a confirmation signal by the access system if the comparison of step d) verifies the identity of the person and/or the vehicle.

A method for identifying a person and/or a vehicle, the method being executed by an access system and comprising the steps of
a) searching for mobile devices in a vicinity of the access system and, if a mobile device is found, sending a request to the mobile device to have the mobile device send a first unique identifier of the person and/or the vehicle to the access system;
b) receiving the first unique identifier from the mobile device and storing the first unique identifier in a buffer of the access system;
c) generating a video stream of a vicinity of the access system using a video camera of the access system, identifying persons and/or vehicles in the generated video stream, and generating second unique identifiers of the persons and/or vehicles using a function for the identified persons and/or vehicles,
d) comparing the second unique identifiers with the first unique identifier for verifying the identity of the person; and
e) creating a confirmation signal by the access system if the comparison of step d) verifies the identity of the person.

Further, a system for identifying a person comprises a mobile device and an access system. The mobile device is configured to store a first unique identifier of the person and/or the vehicle. The access system includes a video camera and is configured to generate a video stream of a vicinity of the access system using the video. The access system is further configured to identify persons and/or vehicles in the generated video stream and to generate second unique identifiers of the persons and/or vehicles (optionally using a function for the identified persons and/or vehicles). The mobile device is configured to send the first unique identifier to the access system and the access system includes a buffer configured to store the first unique identifier sent from the mobile device. The access system is configured to compare the second unique identifiers with the first unique identifier for verifying the identity of the person and/or the vehicle. The access system is further configured to generate a confirmation signal if the comparison verifies the identity of the person and/or the vehicle.

The principal idea of this invention is to use the mobile phone is a local evaluator of face features and/or features of the vehicle. Instead of transmitting the first unique identifier or the raw face features data and/or features of the vehicle to a centralised server, the first unique identifier is exchanged only with the local access system over a local network (e.g. Bluetooth). The access system may not permanently store the first unique identifier and deletes the first unique identifier after the interaction between the access system at the mobile device is completed.

So according to the invention, an organization or entity can maintain data privacy by not permanently storing the first unique identifier or facial images of users (e.g. there is no repository or database of facial scans). Further, the organization or entity can improve efficiency of the organization's systems so that its users can pass its checkpoints faster and seamlessly (e.g., users do not have to take out papers or even their phones when passing through checkpoints).

The invention relates to an interaction between an access system and the mobile device. The mobile device may belong to a person who intends to access a restricted area that is restricted by the access system. Alternatively or additionally, the mobile device may belong to a driver of the vehicle or is an integrated feature of the vehicle with which the driver of the vehicle wants to pass the access system.

The vehicle may be a car, automobile, motorcycle, truck, lorry or the like. The vehicle may have a licence plate which uniquely identifies the vehicle.

The access system may include an access control means such as one or more blocking elements which may comprise mechanical blocking elements, for example in the form of turnstiles, turnstiles with one, two or three blocking arms, sliding doors, lifting-sliding doors, so-called flap gates, gates, barriers and/or bounds. The blocking elements can be actuated in case of a valid access authorization (e.g. the generation of the confirmation signal by the access system) which is checked by the interaction of the access system and the mobile device. The access control means allow and/denies access to a restricted area. For example, the access control means allows and/or denies access to a parking space in case the unique identifier is a dataset for identifying the vehicle.

The access system includes a video camera for video imaging the vicinity of the access system, e.g. a person and/or a vehicle approaching or standing close to the access system. The imaged vicinity may include one or more areas of interest which may be close to and/or directly adjacent to the access system, e.g. the access control means. The video camera may image a predetermined area or the video camera may be configured to change the direction of imaging and may have a changeable focus. For example, the video camera firstly images a large area and, if a person and/or vehicle is detected, the video camera focusses on the person/or vehicle by changing the imaging direction and/or changing the focus.

The video stream generated by the video camera may be stored in a processing buffer for analysis but is not permanently recorded. For example, the video stream data are stored only for the process of identifying persons and/or videos in the video stream and generating the second unique identifiers there form.

The video camera may include one or more optical sensors for obtaining raw video data indicative of the person and/or the vehicle. The raw video data can be in such a format that they can be processed by an external computing device. For example, the access system can be configured to process the raw video data for generating a video of the person and/or the vehicle. The access system may include two or more video cameras each of which can be configured to video image a different area. The imaged areas may partially overlap or are separated from each other. For example, each video camera images an area associated with a respective access control means.

The access system can further include a computing device which may include an access processor and/or an access memory for storing and processing the raw video data generated by the one or more optical sensors. The computing device may be configured to generate or calculate the second unique identifier from the raw video data generated by the one or more optical sensors. The raw video data and the second unique identifier may be considered two forms of biometric data in case of a person or data configured to identify a vehicle. The second unique identifier may be considered a set of data (i.e. a vector) which allows unique identification of a person and/or a vehicle.

For example, the computing device may generate face recognition data (an example of second unique identifier) from the video data the person (an example of raw data). This can be done by identifying a face in a video stream and processing the image of the face of the person by using a certain function (which may be known in the art). The function may include a certain protocol or routine. The face recognition data are a dataset unique to the person. In other words, a person can be uniquely identified by the face recognition data, e.g. the second unique identifier. For example, the access system generates/calculates a vector indicative of the face of the person. Similarly, the access system may be configured to generate the second unique identifier (such as a licence plate number) of a vehicle from the raw video data generated by the video camera. Here again, the access system may use a commonly known function for processing the raw video data into the second unique identifier. The computing device is in data communication (e.g. via wires) with the optical sensors of the video camera.

The identification of a face of the person and/or the license plate of the vehicle in the generated video stream may be executed using well-known methods, which may include programs and/or algorithms for analysing video streams and/or artificial intelligence (e.g. neural networks) which are configured to extract the second unique identifier from the video stream.

The processing of the raw video data generated by the optical sensors of the video camera may allow the reduction of the volume of the data and/or allow comparability with other unique identifiers of the same format, such as the first unique identifier. For example, it can be checked whether a person/vehicle is identical to another person/vehicle by comparing the first unique identifier stored in the system with the second unique identifier generated from a video of the person/vehicle. For example, the first and second unique identifier comply with a standard function and/or format so that the first and second unique identifier can be compared with each other. This may be achieved by processing/calculating the raw video data generated by the sensors by a certain function. In any case, first and second unique identifier have a format that allows automatic comparison by the access system, for example by executing a program, algorithm, and/or software (which is stored in the access memory) by the access processor.

The access system may not store/save the raw video data and/or the first and second unique identifier. For example, the access system (e.g. the access processor and/or the access memory) includes an algorithm and/or program which deletes the first and second unique identifier and the raw video data after the person and/or the vehicle has been granted or denied access. Alternatively or additionally, the access system may be configured to delete the first unique identifier and/or the second unique identifier 5 minutes, 10 minutes, or 15 minutes after the receipt of the first unique identifier and/or the generation of the second unique identifier. This means that the first unique identifier and/or the second unique identifier are stored for the expected duration of the interaction between the mobile device and the access system and deleted after a predetermined period of time, even if no further interaction between the mobile device at the access system occurred after receipt of the first unique identifier. Further, any second unique identifier that is generated from the video stream can be automatically deleted after a predetermined period of time so that the second unique identifier is not permanently stored in the access system. Further, the second unique identifier may be immediately deleted after the comparison with the stored first unique identifiers. For example, the first and/or second unique identifiers may only be stored in a volatile memory of the access processor, but not in the non-volatile access memory. This can ensure that the second unique identifier is not permanently stored and deleted after processing, e.g. after comparison with the stored first unique identifiers.

The buffer of the access system may be a portion of the access memory or a separate volatile memory of the access system. The buffer is configured to store a plurality of first unique identifiers, namely those unique identifiers of the persons and/or vehicles who/which approach the access system or, in other words, currently want to access the restricted area via the access system. So, the access system is configured to handle a plurality of persons and/or vehicles. Each person and/or vehicle includes a mobile device which sends the respective first unique identifier to the access system. Each first unique identifier received is stored in the buffer. The first unique identifiers can be deleted from the buffer as described above.

The access system may include an access transceiver for wireless communication with the mobile device. The access transceiver may be in data communication with the access processor, the access memory, and/or the video camera. For example, the access system is configured to execute a handshake between the access transceiver and the mobile device and setup a secure communication channel if the person and/or vehicle approach the access system.

For example, the person/vehicle approaches the access system. A secure data channel is established between the mobile device and the access system. Subsequently, the access system may send a prompt to the mobile device which triggers the mobile device to send the first unique identifier to the access system. Optionally, the interaction of the access system and the mobile device is autonomous from a manual input by the person. For example, the person does not need to activate the mobile device for the interaction of the access system with the mobile device. Alternatively, the interaction is designed that the person starts the interaction or controls steps of the interaction. For example, the person may prompt the mobile device to set up a secure communication with the access system if the person manually confirm this. Alternatively or additionally, the mobile device sends the first unique identifier to the access system only after the explicit authorisation of the person.

The mobile device may be a handheld user device which can be a mobile phone or the like. The person may carry the mobile device. The person may also carry the mobile device when driving the vehicle wherein the mobile device stores the first unique identifiers identifying the vehicle. The mobile device may also encompass components integral to the vehicle which allow to store and communicate the first unique identifier with the access system. For example, the vehicle includes a vehicle transceiver for data communication with the access system and a vehicle memory for storing the first unique identifier. The mobile device may also include a mobile device that is specifically designed for automatized access, e.g. to a parking space and/or a toll road.

The mobile device may include a processor, a memory, and a transceiver. The memory may be configured to store programs, algorithms, and/or applications which can be executed by the processor. The memory is further configured to store information on the identity of the person/vehicle (identification information) and the first unique identifier of the person/vehicle. The mobile device may further include a display and/or a camera which are in data communication with the processor and/or the memory. The transceiver of the mobile device can allow wireless data communication with the access system and/or the internet. For example, the transceiver can connect to a cellular network, a mobile network, and/or a Wi-Fi network.

The mobile device may further store information on the identity of the person (identification information) which may include personal data such as name, address, date of birth, etc. Further, the identification information may include a unique number assigned to the person which allow unique identification of the person based on the number, for example an employment number and/or a registration number.

The first unique identifier stored on the mobile device may be generated based on the same function as the second unique identifier generated by the access system. Alternatively or additionally, the first unique identifier stored in the mobile device has to same format as the second unique identifier such that first unique identifier and the second unique identifier can be compared by a software, algorithm, and/or application stored on the access system. In general, the first unique identifier and the second unique identifier are in a format that allows automatic comparison of the two datasets, for example using a computing device, such as the access processor and/or the access memory. The comparison of the first unique identifier and the second unique identifier may solely be executed by the access system, for example solely by the access processor and/or the access memory.

The software, algorithm and/or application on the mobile device which stores the first unique identifier may be designed such that the person cannot change the first unique identifier. For example, the software, algorithm and/or application may be certified in that the first unique identifier cannot be changed, modified or otherwise influenced by the person so that the first unique identifier can be trusted. The software, algorithm and/or application stored on the mobile device which stores the first unique identifier may be considered a secure element of the mobile device.

The comparison of the second unique identifier with the first unique identifier (in particular, the plurality of the first unique identifiers stored in the buffer) may result in a generation of the confirmation signal (which may be a simple "Yes" and/or which is then sent to the access control means) if the first unique identifier and the second unique identifier are considered to relate to the same person/vehicle. If the comparison of the first unique identifier and the second unique identifier indicates that the first unique identifier and the second unique identifier refer to two different persons/vehicles, the access device may generate no configuration signal or a signal of non-confirmation (which may be a simple "No").

The access system may be configured to identify a plurality of faces and/or identification plates in the video stream. The access system may be configured to simultaneously generate the second unique identifiers from the plurality of the identified faces and/or identification plates. In this case, the access system may be configured to simultaneously compare the plurality of second unique identifiers with the plurality of first unique identifiers stored in the buffer. Alternatively, the access system may be configured to generate a second unique identifiers one after the other, for example in the order of detection of the of faces and/or identification plates in the video stream. In this case, the access system may be configured to compare the latest generated second unique identifier with the plurality of first unique identifiers stored in the buffer.

The access processor, the access memory, and/or the access transceiver may be arranged within the common housing of the access system. The video camera may be attached to this housing. However, the camera may be located separately to the housing. The position of the video camera may be chosen for best imaging in the area of interest in front of or close to the access system, in particular the access control means.

In an optional embodiment, the mobile device includes a camera and step a) includes obtaining an image of the person and processing the obtained image for generating the first unique identifier using the function. Optionally, step c) includes constantly detecting faces in the video stream and generating facial recognition data of the detected faces as the second unique identifier.

In an optional embodiment, the processing of the obtained image is executed on the mobile device or on an external computing device in data communication with the mobile device.

The first unique identifier can be generated by taking an image of the person using the camera of the mobile device and processing the image data for obtaining the first unique identifier. This can be done in a similar way as done on the access system for identifying the second unique identifier. For example, the mobile device includes a program, software, and/or application which is configured to identify a face in the image taken and calculate the first unique identifier from the identified face. A similar function, method, and or algorithm can be used for generating the first unique identifier as uses with the access system for generating the second unique identifier. Further, the programme, software, and/or application stored on the mobile device may be configured to prompt the person to take another image using the camera if the image previously taken is not suitable for generating the first unique identifier. For example, the angle and/or distance of the camera with respect to face was unsuitable.

The first unique identifier and the second unique identifier are facial recognition data in this embodiment. So the mobile device as well as the access device generate facial recognition data from the image and the video stream, respectively.

Alternatively, the person takes the picture of themselves and sends the image data to an external processing device. This may be a remote server hosting the algorithm, program, and/or software for processing the image data to obtain the first unique identifier. The external processing device may also be a cloud-based solution. The processing of the image data on the external processing device may help to ensure a correct generation of the first unique identifier (e.g. which cannot be manipulated by the person).

The mobile device may communicate with the external processing device via the internet. The external processing device may be operated by a third party. The third party may be the operator of the access system or any other company, organisation and/or service provider which is entrusted by the operator of the access system to verify the identification information and/or the biometric data.

In a further embodiment, the third party may generate the first unique identifier and sends the first unique identifier to mobile device. For example, the person visits the third party which takes an image of the person and generates the first unique identifier (i.e. face recognition data) using the same function and/or format as the access system. Then, the third party sends the face recognition data and/or the identification information to the mobile device. Thereby, the third party may be a trusted entity which guarantees the correctness of the first unique identifier in connection with the identification information.

The first unique identifier (e.g. the facial recognition data stored on the mobile device) and/or the identification information can be verified by a third party and cannot be changed by the person after verification. The third party may check that the facial recognition data (i.e. the first unique identifier) corresponds to the person. This may be desired if the first unique identifier and/or the identification information is input by the person themselves (using the process described above).

In an optional embodiment, step a) includes manually inputting the licence plate number as the first unique identifier. Optionally, step c) includes constantly detecting licence plates in the video stream and generating licence plate numbers of the detected licence plates as the second unique identifier.

The mobile device may include an input, such as a keyboard or a portion on the touch display configured to input the license plate number. The license plate number may also be photographed and processed to generate a first unique identifier. However, it is usually simpler to directly input the license plate number as the first unique identifier. As described above, the license plate number may be verified by a third party.

The access system is configured to detect licence plate numbers of vehicles in the video stream and generate the second unique identifier from the detected licence plates. In this case, the second unique identifier may include a license plate number. This allows unique identification of a vehicle.

In this case, the access system identifies licence plates in the video stream and extracts the licence plate number as the second unique identifier from the identified licence plates. This may be executed as described above in connection with the face recognition data.

In an optional embodiment, the confirmation signal is generated in step e) if the confidence level of the comparison is above 50%, optionally above 40%. In an optional embodiment, the buffer of the access system stores up to 100 first unique identifiers, optionally up to 50 first unique identifiers.

When comparing a second unique identifier with large numbers of first unique identifiers (e.g. 50000 persons in a sport stadium), a high level of confidence (e.g. above 90% or 95) is usually required to reliably detect the second unique identifier amongst the large number of first unique identifiers. However, the buffer of the access system may only store the first unique identifiers of those persons/vehicle which are in the vicinity of the access system so that the number of first unique identifiers stored in the buffer is low (e.g. less than 100, 90, 80, 70, 60, 50, 40, or 30). As the number of first unique identifiers with which the second unique identifier is compared is low, the confidence level can be reduced since even a low confidence level amongst a low number of first unique identifiers is a good indication that the second unique identifier correspond the first unique identifier. The reduced level of confidence required for generating the confirmation signal reduces the requirements for detecting the faces and/or licence plates in the video stream. For example, a face of a person may be analysed for generating the second unique identifier even if only a portion of the face of is visible in the video stream (e.g. a side view of the face of the person). Further, the resolution of the video stream can be lower and/or the distance between the video camera and the face of the person can be larger (resulting in a reduced resolution of the phase of the person in the video stream). Both aspects result in a lower confidence level which is acceptable with this invention due to low number of first unique identifiers stored in the buffer.

The confidence level is a measure of how sure the access system is that two faces/licences plates are from the same person/vehicle. Systems of the prior art and/or the access system calculate this confidence level in a way that 100 is theoretically the highest value to reach and 0 would be the theoretical minimum. From the mathematical point of view, this may be the distance of two points in a multi-vector space. Each point in the multi-vector represents the vector which belongs to the features extracted from a face image or image of the licence plate. The lower the distance the more likely the two faces/licences plates are from the same person/vehicle. For better usability, most prior art systems and/or the access system take the inverse value of this distance and scale it to a range from 0 to 100.

As described above, the access system can tolerate larger distances between two points in the multi-dimensional vector space since there is a very sparse vector space (only about 30 to 100 points are in the vector space which are potential candidates to match with, i.e. the first unique identifiers stored in the buffer). This helps to even accept images of faces and/or licences plates which are less optimal (i.e. not looking straight in the video camera) since those have usually a larger distance to the reference face in the vector space. The access system is more likely to recognize a person while walking by or a vehicle with not all characters of the license plate to be correctly read.

Further methods and techniques are known in the prior art to determine and assess a confidence level for the comparison of two unique identifiers. Those are known to the skilled person and can be used with and/or adapted to the access system.

In an optional embodiment, step a) further comprises storing access authorization data (e.g. a ticket) on the mobile device, the access authorization data is associated with the first unique identifier, wherein optionally step b) further comprises sending the access authorization data to the authorization device.

In this embodiment, access to the restricted area controlled by the access system is dependent on a further condition, namely a valid ticket or access authorization data. The (virtual) ticket or an authorization token can be an example of access authorization data. The ticket or authorization data may be purchased and/or stored on the same secure element of the mobile device, e.g. a software, algorithm, program and/or application of the mobile device that stores the first unique identifier and/or the identification information. The ticket or authorization data may be linked to the identification information and/or the first unique identifier. The access system may include a databank of all valid tickets/authorization data so that the access system may compare the ticket of the person/vehicle sent from the mobile device with the databank to assess whether the ticket/the authorization data of the person/vehicle are valid or not. The access system may delete the ticket/authorization data from the databank of valid tickets/authorization data after access has been granted to the person.

In an optional embodiment, the access system further comprises an access control means for (physically) allowing or denying access to a restricted area, wherein optionally the method further comprises step f) of allowing access by the access control means if the confirmation signal is generated.

In an optional embodiment, the system for identifying a person and/or a vehicle further includes an access control means for allowing or denying access to a restricted area, wherein the access system is configured to allow access to the restricted area if the confirmation signal is generated.

The access control means may unlock the blocking elements or open the blocking element after receipt of the confirmation signal. This means that the access control means is controlled by the access system (using the confirmation signal) and is in data communication with the access system (e.g. the access processor).

In an optional embodiment, step b) further includes sending identification information of the person to the access system and wherein, in step f), access by the access control means is allowed if the identification information is on a list of authorised persons stored with the authorisation device. Optionally, in step f), access by the access control means is allowed if the authorization data/ticket are valid.

For example, the identification information of the person/vehicle is sent to the mobile device. The access system may store a list of persons/vehicles which are allowed to pass the access control means. So, the access system checks whether the person/vehicle is eligible to access the restricted area by checking the identification information. The confirmation signal is generated if this check is affirmative and the confirmation signal is received from the mobile device. Alternatively or additionally, the confirmation signal is only generated if, in addition, the authorization data/ticket sent from the mobile device to authorization device is considered to be valid.

In an optional embodiment, the video camera, the access control means, the access transceiver, the access processor and/or the access memory are integrated in a single system exchanging information.

The video camera, the access control means, the access transceiver, the access processor and/or the access memory may form the access system or in other words a unitary system. The video camera, the access control means, the access processor and/or the access memory may be all arranged on site, for example at the airport, at an event venue, a parking site, or other locations where automatic access is required. For example, the access processor and the access memory may be a central server which is in data communication with a plurality of access control means, a plurality of access transceivers, and/or a plurality of video cameras. Each access control means may be provided with a video camera and an access transceiver. Alternatively, there are plurality of access systems wherein each access system includes the access processor, the access memory, access transceiver, the access control means, and/or the video camera.

In an optional embodiment, data communication between the mobile device and the access system may be executed via a common transceiver such as the access transceiver. It is also possible that a plurality of access control means and/or a plurality of video cameras share a common transceiver i.e. not each video camera is provided with an access transceiver but data communication with the mobile device is executed via the common transceiver. In this embodiment, the video camera and the access control means are in connected via wires for data communication.

In an optional embodiment, the mobile device communicates with the access system (e.g. the access transceiver) using short-range wireless technology. Optionally, step b) includes sending the first unique identifier via Bluetooth Low Energy.

The short-range wireless technology may include at least one of: Bluetooth, Bluetooth Low Energy (BTLE), Zigbee, infrared, and Wi-Fi. This means that the mobile device and the access system are each provided with a transceiver configured to use short-range wireless technology. One advantage of using short-range wireless technology, especially for the communication between the mobile device and the access system, is that the access system is notified of the presence of a mobile device and, consequently, of the presence of the person/vehicle wanting access to the restricted area. Thus, the access system may be configured to search for mobile devices using short-range wireless technology.

Further, if a secure communication between access system and the mobile device is established, this can be used as a trigger point for activating the video camera for obtaining the raw video data, e.g. starting the video camera. Use of short-range wireless technology (i.e. the communication between the mobile device and the access system) may also be possible if the mobile device is in the standby mode. This may facilitate data exchange between access system and the mobile device without user interaction, i.e. the software, algorithm, program, and/or application of the mobile device may autonomously communicate with the access system for receiving the first unique identifier.

An additional advantage of using short-range wireless technology is that the access system only receives the first unique identifiers of those persons/vehicle which are in the vicinity of the access system. This inherently reduces the number of first unique identifiers stored in the buffer. So, the first unique identifiers cannot be stored in advance which simultaneously reduces the number of first unique identifiers with which the second unique identifier is compared. Additionally, this reduces the duration the first unique identifiers is stored with the access system reducing the risk of data theft.

In an optional embodiment, the access system does not permanently store the second unique identifier obtained in step c). For example, the raw video data and the second unique identifier are reliable deleted from the memory of the access system after the confirmation signal is generated. Alternatively, the access system is configured so that no data generated by video camera can be reliably or permanently stored.

The invention is explained in more detail below by way of example with reference to the accompanying figures.
- Fig.1: shows a schematic representation of a first embodiment of a system for identifying a person;
- Fig.2: shows a schematic representation of a second embodiment of a system for identifying a vehicle;
- Fig. 3: shows a schematic representation of a mobile device of the system for identifying a person or vehicle of Figs. 1 and 2;
- Fig. 4: shows a schematic representation of a certain steps of a method for identifying a person and/or vehicle and allowing access to a restricted area;
- Fig.5: shows a block diagram of the method for identifying a person and/or vehicle and allowing access to a restricted area of Fig. 4;
- Fig. 6a: shows a schematic diagram of a second unique identifier in relation to first unique identifiers stored on an access system of the system;
- Fig. 6b: shows a schematic diagram of a second unique identifier in relation to first unique identifiers stored on a system of the prior art.

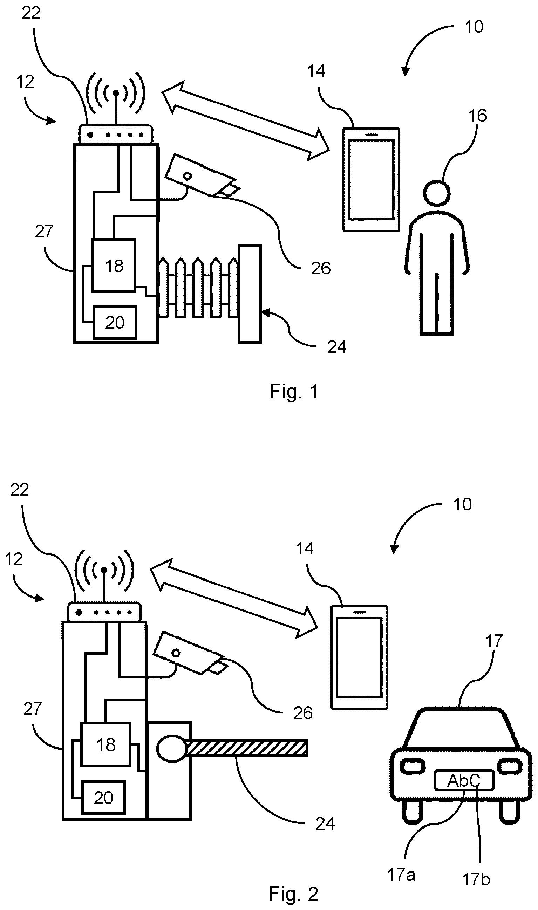

Fig. 1 shows a system 10 for identifying a person 16 which also is capable of allowing or denying access to a restricted area. The system 10 for identifying a person 16 includes an access system 12 and a mobile device 14. The access system 12 may provide an automatic gate at an airport or at an event location such as a sport stadium. The person 16 approaches the access system 12 carrying the mobile device 14 which automatically communicates with the access system 12. Based on the communication between the access system 12 and the mobile device 14, the person 16 is granted or denied access to the restricted area.

In the embodiment of Fig. 1, the access system 12 includes an access processor 18, an access memory 20, an access transceiver 22, an access control means 24, and/or a video camera 26. The access processor 18 is in data communication with the access memory 20, the access transceiver 22, the access control means 24, and/or the video camera 26. This is indicated in Fig. 1 by the schematic wires which allows data communication between the respective components. The access processor 18 and the access memory 20 may be located within a housing 27 of the access system 12. The access transceiver 22, the access control means 24, and/or the video camera 26 can be attached to the housing 27 and/or arranged therein.

The access processor 18 and the access memory 20 are configured to execute various programs and/or algorithms. The access processor 18 may be configured to control the video camera 26 and the access control means 24. Further, the access processor 18 may exchange data with the mobile device 14 via the access transceiver 22.

In the embodiment of Fig. 1, the video camera 26 is configured to video image a vicinity of the access system 12, in particular a face of the person 16 standing or walking close to the access control means 24. The access control means 24 includes a blocking element (indicated by the fence in Fig. 1) which can be automatically opened or unlocked under the control of the access processor 18. If the blocking element is opened or unlocked, the person 16 can access the restricted area.

The access transceiver 22 is configured to provide short-range wireless communication between the access system 12 and the mobile device 14. For example, the access transceiver 22 provides Bluetooth Low Energy (BTLE). In the embodiment of Fig. 1, all components of the access system 12 are arranged on site and data communication is established between the components on site.

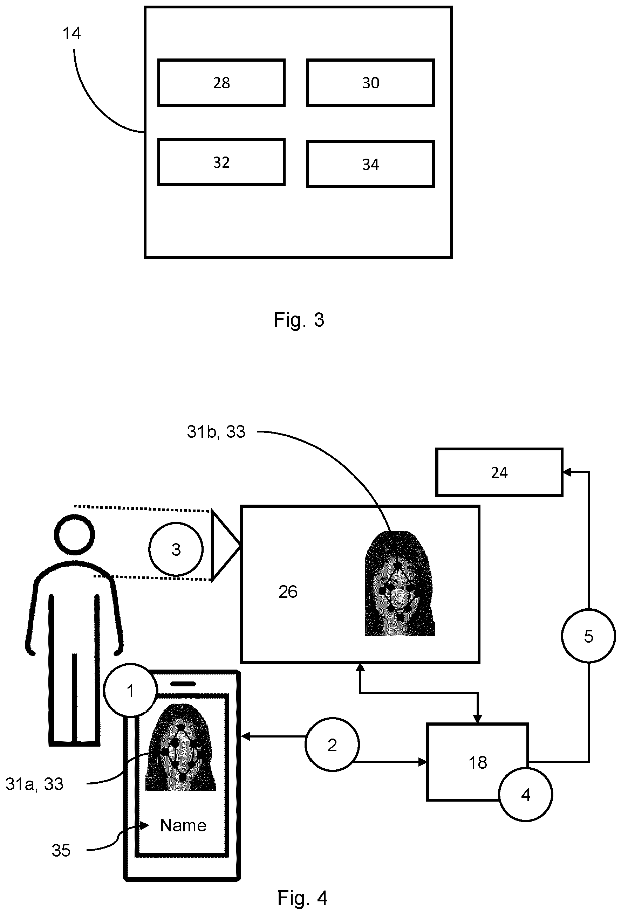

Fig. 3 shows the functional components of the mobile device 14 which may be a mobile phone. The mobile device 14 can include a processor 28, a memory 30, a transceiver 32, and/or a camera 34. The processor 28 may be configured to control the transceiver 32 and/or the camera 34. Further, the processor 28 is in data communication with the memory 30, the transceiver 32, and/or the camera 34. The processor 28 may be configured to execute various programs, algorithms and/or applications that are stored in the memory 30. For example, the memory 30 stores a first unique identifier 31a and information on the identity of the person 16 (identification information 35). The transceiver 32 can connect to a cellular network or mobile network for providing internet access and/or provide short-range wireless communication with the access transceiver 22. The person 16 can use the camera 34 for taking an image of the face of the person 16. The processor 28 may be configured to generate face recognition data 33 (an example of first unique identifier 31a) from the image taken by the camera 34 and store the process face recognition data 33 (or the first unique identifier 31a) in the memory 30. For example, the processor 28 executes a function which transforms the image into biometric face recognition data 33. The function may be part of an application stored on the mobile device 14 which cannot be changed by the person 16. This application may be considered a secure element. Further, the mobile device 14 may include an input device allowing the person 16 to input information on the identity (identification information 35) of the person 16 (e.g. name, address, date of birth) and/or a licence plate number 17b of a vehicle 17 as the first unique identifier 31a which can also be stored in the memory 30 (e.g. in the secure element).

The mobile device 14 may also be configured to receive a ticket (an example of authorization data) via the transceiver 32 and store the ticket in the memory 30 (e.g. in the secure element). The ticket may be associated with identification information (35) and the first unique identifier 31a.

The embodiment of Fig. 2 includes the same features, characteristics, and optional components as the embodiment of Fig. 1 except for the following differences:
The access system of Fig. 2 controls the access of the vehicle 17 such as a car. To this end, the access control means 24 may include a barrier. The person 16 driving the vehicle 17 carries the mobile device 14. In other words, the mobile device 14 may be in the vehicle 17. The mobile device 14 communicates with the access system 12 for obtaining access to the restricted area (such as a parking space) through the access control means 24. A ticket stored on the mobile device 14 may be a parking ticket. The vehicle 17 includes a licence plate 17a. The licence plate number 17b may be input in the mobile device 14 as the first unique identifier 31a of the vehicle 17.

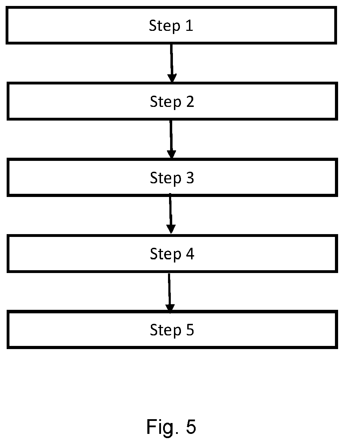

A method for operating the system 10 for identifying the person 16 and/or the vehicle 17 and allowing access of the person 16 and/or the vehicle 17 to the restricted area is described in connection with Fig. 4 and the block diagram of Fig. 5.

In step 1 and corresponding numeral 1 in Fig. 4, the person 16 takes a picture of their face using the camera 34. The processor 28 of the mobile device 14 generates biometric face recognition data 33 (i.e. the first unique identifier 31a) from the image and stores the biometric face recognition data 33 in the memory 30. Further, identification information of the person 16 is stored in the memory 30 which can be manually input by the person 16. These two processes can be executed within the secure element of the mobile device 14. The biometric face recognition data 33 may be generated using a predetermined function. Further, the mobile device 14 is configured such that the face recognition data 33 and the identification information cannot be changed by the person 16. This ensures that the biometric face recognition data 33 and identification information can be trusted since it cannot be changed by the person 16. The face recognition data 33 can be paired with a ticket. With regard to the embodiment of Fig. 2, the person 16 may input the licence plate number 17b of the licence plate 17a of the vehicle 17 as the first unique identifier 31a.

In step 2 and corresponding numeral 2 in Fig. 4, the mobile device 14 and the access system 12 get in data communication which each other, for example if the mobile device 14 is within the range of the short-range wireless access transceiver 22. The access system 12 may search for mobile devices 14 which are within the range of the short-range wireless access transceiver 22. If so, the access system 12 (e.g. the processor 18) may generate a request sent to the mobile device 14 which prompts the mobile device 14 to send the first unique identifier 31a, the identification information, and/or the ticket to the access system 12. Optionally, the mobile device 14 and the access system 12 set up a secure channel for data communication.

In step 3 and corresponding numeral 3 in Fig. 4, the video camera 26 starts video imaging the vicinity of the access system 12, identifies the face of the person 16 in the video stream, and generates biometric face recognition data 33 (an example of the second unique identifier 31b) from the video stream using the same function as executed when generating the biometric face recognition data 33 stored on the mobile device 14. This allows that the second unique identifier 31b can be compared to plurality of first unique identifiers 31a stored on the access system 12 (i.e. the first unique identifiers 31a of all persons 16 whose mobile devices 16 are within the data communication range of the access transceiver 22). The generation of the biometric face recognition data 33 is executed by the access processor 18. Each time, the communication between the mobile device 14 and the video camera 26 is done via the access transceiver 22. The received first unique identifiers 31a are stored in a buffer of the access system 12. The buffer may be a predetermined portion of the access memory 20. The buffer may be configured to store up to 50 first unique identifiers 31a.

With regard to the embodiment of Fig. 2, the video camera 26 starts video imaging the vicinity of the access system 12, identifies licences plates 17a in the video stream, and extracts the licence plate number 17b (an example of the second unique identifier 31b) from the video stream using well-known functions.

In step 4 and corresponding numeral 4 in Fig. 4, the processor 28 executes an algorithm for comparing the second unique identifier 31b with the first unique identifier 31a stored in the buffer. If it is verified that the second unique identifier 31b and the first unique identifier 31a are identical to a confidence level 37 of at least 40% or 50%, this indicates that the person 16 or vehicle 17 standing in front of the video camera 26 is identical with the person 16 or vehicle 17 stored in the mobile device 14. Then, the processor 28 generates a confirmation signal which is sent to the access control means 24. Optionally, in step 4, it is also checked whether the person 16 and/or vehicle 17 have a valid ticket that was sent from the mobile device 14. The confirmation signal may only be generated if the ticket is valid. Further optionally, the access processor 18 checks whether the person 16 or the vehicle 17 is eligible to enter the restricted area. For example, the identification information matches information of eligible persons stored in the access system 12.

In step 5 and corresponding numeral 5 in Fig. 4, upon receipt of the confirmation signal, the access control means 24 opens the blocking element or unlocks the blocking element so that the person 16 and/or the vehicle 17 can pass through the access control means 24.

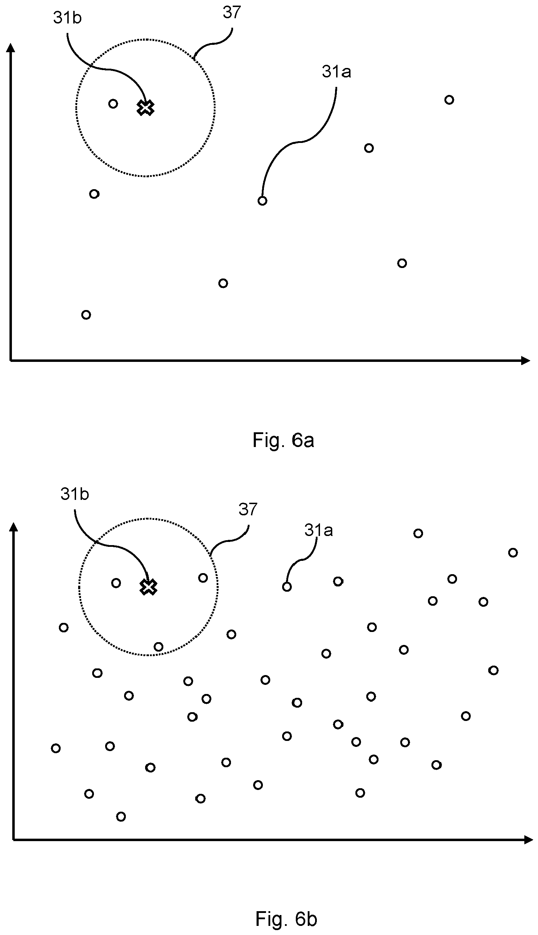

Fig. 6a shows a visualisation of the first unique identifiers 31a in relation to the second unique identifiers 31b in a two-dimensional space of the first and second unique identifiers 31a, 31b. The space may have more than two dimensions, e.g. a vector space if the first and second unique identifiers 31a, 31b are vectors. This vector space may have 64 or 128 dimensions. The second identifier 31b is considered identical to one of the first identifiers 31a stored in the buffer of the access system 12 if the distance between the one of the first identifiers 31a and the second identifier 31b is less than a threshold or confidence level 37. In Fig. 6a, the confidence level 37 is depicted as a circle. However, this may be a statistical value as described above.

Fig. 6b shows the same configuration as described above except for a prior art system. There, much more first identifiers 31a are stored with the system, for example all visitors to a football stadium. Therefore, much more first identifiers 31a are compared to the second unique identifier 31b. Thus, the same confidence level 37 does not result in a unique identification of a person 16. Rather, the confidence level 37 needs to be made greater (which corresponds to a reduction of the radius of the circle). In other words, the invention allows to reduce the confidence level (i.e. increase the radius of the circle) due to the sparsely populated space of the first unique identifiers 31a stored in the buffer.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A method for identifying a person (16) and/or a vehicle, comprising the steps of
a) storing a first unique identifier (31a) of the person (16) and/or the vehicle on a mobile device (14);
b) sending the first unique identifier (31a) from the mobile device (14) to an access system (12) and storing the first unique identifier (31a) in a buffer of the access system (12);
c) generating a video stream of a vicinity of the access system (12) using a video camera (26) of the access system (12), identifying persons (16) and/or vehicles in the generated video stream, and generating second unique identifiers (31b) of the persons (16) and/or the vehicles using a function for the identified persons (16) and/or vehicles;
d) comparing, by the access system (12), the second unique identifiers (31b) with the first unique identifier (31a) for verifying the identity of the person (16) and/or the vehicle; and
e) generating a confirmation signal by the access system (12) if the comparison of step d) verifies the identity of the person (16) and/or the vehicle.

2. The method of claim 1, wherein
wherein the mobile device (14) includes a camera (34) and step a) includes obtaining an image of the person (16) and processing the obtained image for generating the first unique identifier (31a) using the function, and
step c) includes constantly detecting faces in the video stream and generating facial recognition data of the detected faces as the second unique identifier (31b).

3. The method of claim 3, wherein the processing of the obtained image is executed on the mobile device (14) or on an external computing device in data communication with the mobile device (14).

4. The method of any preceding claim, wherein
step a) includes manually inputting the licence plate number (17b) as the first unique identifier (31a), and
step c) includes constantly detecting licence plates in the video stream and generating licence plate numbers (17b) of the detected licence plates as the second unique identifier (31b).

5. The method of any preceding claim, wherein the confirmation signal is generated in step e) if the confidence level (37) of the comparison is above 50%, optionally above 40%.

6. The method of any preceding claim, wherein step a) further comprises storing a ticket on the mobile device (14), the ticket is associated with the first unique identifier (31a), wherein step b) further comprises sending the ticket to the authorization device.

7. The method of any preceding claim, wherein the access system (12) further comprises an access control means (24) for allowing or denying access to a restricted area, wherein the method further comprises step f) of allowing access by the access control means (24) if the confirmation signal is generated.

8. The method of claim 8, wherein step b) further includes sending identification information (35) of the person (16) to the access system (12) and wherein, in step f), access by the access control means (24) is allowed if the identification information (35) is on a list of authorised persons stored with the authorisation device.

9. The method of claims 7 or 8 when dependent on claim 6, wherein, in step f), access by the access control means (24) is allowed if the ticket is valid.

10. The method of any preceding claim, wherein the mobile device (14) communicates with the access system (12) using short-range wireless technology.

11. The method of any preceding claim, wherein the buffer of the access system (12) stores up to 100 first unique identifiers (31a), optionally up to 50 first unique identifiers (31a).

12. The method of any preceding claim, wherein step b) includes sending the first unique identifier (31a) via Bluetooth Low Energy.

13. A system for identifying a person (16) and/or a vehicle, comprising
a mobile device (14) configured to store a first unique identifier (31a) of the person (16) and/or the vehicle, and
an access system (12) including a video camera (26), the access system (12) configured to generate a video stream of a vicinity of the access system (12) using the video, to identify persons (16) and/or vehicles in the generated video stream, and generate second unique identifiers (31b) of the persons (16) and/or vehicles using a function for the identified persons (16) and/or vehicles,
wherein the mobile is configured to send the first unique identifier (31a) to the access system (12) and the access system (12) includes a buffer configured to store the first unique identifier (31a) sent from the mobile device (14),
wherein access system (12) is configured to compare the second unique identifiers (31b) with the first unique identifier (31a) for verifying the identity of the person (16) and/or the vehicle, and
wherein the access system (12) is configured to generate a confirmation signal if the comparison verifies the identity of the person (16) and/or the vehicle.

14. A method for identifying a person (16) and/or a vehicle, the method being executed by an access system (12) and comprising the steps of
a) searching for mobile devices (14) in a vicinity of the access system (12) and, if a mobile device (14) is found, sending a request to the mobile device (14) to have the mobile device (14) send a first unique identifier (31a) of the person (16) and/or the vehicle to the access system (12);
b) receiving the first unique identifier (31a) from the mobile device (14) and storing the first unique identifier (31a) in a buffer of the access system (12);
c) generating a video stream of a vicinity of the access system (12) using a video camera (26) of the access system (12), identifying persons (16) and/or vehicles in the generated video stream, and generating second unique identifiers (31b) of the persons (16) and/or vehicles using a function for the identified persons (16) and/or vehicles;
d) comparing the second unique identifiers (31b) with the first unique identifier (31a) for verifying the identity of the person (16); and
e) creating a confirmation signal by the access system (12) if the comparison of step d) verifies the identity of the person (16).
